Europäisches Patentamt

European Patent Office

Office européen des brevets

(19)

(11) Publication number: **0 143 856**
**B1**

(12) **EUROPEAN PATENT SPECIFICATION**

(45) Date of publication of patent specification: **08.02.89**

(51) Int. Cl.⁴: **F 21 S 5/00, G 02 B 6/04**

(21) Application number: **83111965.6**

(22) Date of filing: **29.11.83**

(54) Photoradiator.

(43) Date of publication of application:
**12.06.85 Bulletin 85/24**

(45) Publication of the grant of the patent:
**08.02.89 Bulletin 89/06**

(84) Designated Contracting States:
**CH DE FR GB IT LI SE**

(56) References cited:
**EP-A-0 093 998**
**FR-A-2 220 144**
**US-A-3 278 738**
**US-A-3 535 018**
**US-A-4 165 496**
**US-A-4 200 356**
**US-A-4 284 449**

**PATENTS ABSTRACTS OF JAPAN, vol. 6, no.
84 (P-117)962r, 22nd May 1982; & JP - A - 57 20
704**

**PATENTS ABSTRACTS OF JAPAN, vol. 6, no.
125 (P-127)1003r, 10th July 1982; & JP - A - 57
49 913**

(73) Proprietor: **Mori, Kei**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

The present invention relates to a photoradiator according to the generic clause of the independent claim.

Effective use of solar energy is the key to energy saving today and has been studied in various fields actively. For the most effective use of solar energy, solar energy has to be availed as it is without being transformed into another kind of energy such as thermal energy or electrical energy. In the light of this, I have made various proposals for an illumination system which utilizes solar energy. The illumination system employs a light conducting element such as a fiber optic cable through which the sunlight converged by a lens or the like is conducted to a desired location to stream out thereat to illuminate the ambience.

In the illumination system of the type described, the light advancing through the light conductor has directivity. Therefore, if the light is output at a simple cut end of the light conductor, it becomes radiated over an angle $\theta$ which is usually as small as about 46°. The light streaming through the simple cut end of the light conductor would fail to evenly illuminate a desired space such as a room. I have proposed, in various forms, a photoradiator which is designed to effectively diffuse light conducted by a fiber optic cable to provide even illumination over a wide range.

Another problem encountered with a light conducting element of the kind described is that when it is laid over a length sufficient for practical use, fringes develop in the light emanating from the light conductor which are undesirable for ordinary lighting applications, although some particular applications may rather prefer them. Where the light propagating through the light guide is a laser or the like, fringes appear therein even if the light conductor is of a very small diameter such as an optical fiber, rendering the light unfeasible for use with a laser microscope or the like.

From US—A—3 535 018 a photoradiator for diffusing light transmitted therethrough is known, comprising cylindrical light conducting means, having a longitudinal axis and an outer cylindrical wall. A plurality of notches is provided in said light conducting means and extends radially inwardly from said outer cylindrical wall.

The notches are aligned along the longitudinal axis of the photoradiator.

From the US—A—3 278 738 a photoradiator is known in the form of a rod whose end surfaces are specifically formed to give a certain angular deflection to the light, coming out from the rod shaped radiator.

From Patent Abstracts of Japan, Volume 6, No. 84 (P-117), (962) May 22nd, 1982, a photoradiator is known to be comprised of an input optical fiber and an output fiber. Both fibers having ends facing each other. The end of the input optical fiber has a parabolic surface and is inclined to it's optical axis. The end surface of the opposing output fiber having a flat surface, being perpendicular to the optical axis of said fiber.

It is the object of the present invention to provide photoradiators which are capable of effectively diffusing light transmitted therethrough to the outside by means of a simple construction allowing light propagating therethrough to be radiated to the outside in a desired direction and in a desired quantity.

This task is solved with photoradiators having the features of claim 1.

The features and advantages of the invention will become apparent from the following detailed description taken in consideration with the accompanying drawings in which Fig. 1 shows the first embodiment of the invention; Fig. 2 shows a second embodiment of the invention; and Fig. 3 shows a third embodiment of the invention.

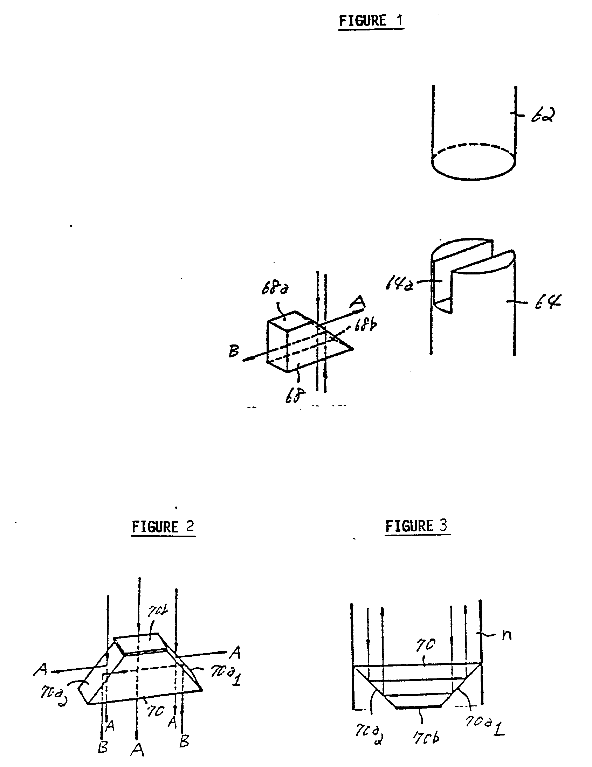

Referring to Fig. 1, an embodiment of the present invention is shown which is furnished with means for controlling a quantity of light radiation. The photoradiator in Fig. 1 comprises a first light conductor 62, a second light conductor 64 and a transparent control member 68. Either one of the conductors 62 and 64 (64 in this particular embodiment) is formed with a recess 64a at an end thereof which connects to the other element. The transparent control member 68 is removably disposed in the recess 64a. As shown, the control member 64 includes a first surface part 68a and an inclined surface part 68b. In this photoradiator construction, light propagating through the light conductor 62 is partly transmitted to the light conductor 64 via the first surface part 68a of the control member 68 and the rest is partly reflected outwardly by the inclined surface part 68b while being partly routed into the light conductor 64.

A characteristic feature of the photoradiator shown in Fig. 1 is that the quantity of light steered by the inclined surface part 68b of the control member 68 is adjustable by controlling the position of the control member 68 in the recess 64a. Light from the light conductor 62 will be partly reflected by the inclined surface part 68b of the control member 68 as indicated by an arrow A, while light from the light conductor 64 will be reflected by the inclined surface part 68b as indicated by an arrow B. Therefore, light may be supplied in either one of the opposite directions as desired.

Another example of the transparent control member is shown in Fig. 2. As shown, the alternative transparent control member 70 comprises two inclined surface parts $70a_1$ and $70a_2$ which refelect light from the light conductor 62 (Fig. 1) in two different directions, as indicated by arrow A. The position of such a control member is adjustable in the recess 64a (Fig. 1) to vary the proportions of the light reflected by the opposite inclined surface parts $70a_1$ and $70a_2$ to each other. Again, only one inclined surface part may be formed on the member 70 in the extreme case. The control member 70, different from the control member 68 of Fig. 1, is incapable of reflecting light coming in from the light conductor 64 (Fig. 1) since it would reflect it back thereinto at the inclined surface parts 70a₁ and 70a₂ as indicated by arrow B.

It will be apparent that a number of interconnection surfaces each including an inclined surface part or surface parts as described may be defined sequentially along the axis of the photoradiator. In such a case, the control member 70 shown in Fig. 2 may be installed in the photoradiator in the position shown in Fig. 3 to return light reached the last list conductor $n$, thereby causing more effective radiation of light. It is necessary then to treat a flat surface 70b between the inclined surface parts 70a₁ and 70a₂ to reflect incidental light.

## Claims

1. A photoradiator for diffusing light transmitted therethrough comprising a first and a second cylindrical light conductor (62, 64), said conductors being arranged along a common longitudinal axis, and each having an outer cylindrical wall, said first cylindrical light conductor (62) having an end-surface facing the end-surface of said second cylindrical light conductor, characterized in that said end-surfaces of the first conductor (62) and the second conductor (64) both have a flat end-surface extending perpendicularly to said longitudinal axis, the end-surface of said second cylindrical light conductor being provided with an elongate recess (64a) having a longitudinal axis extending perpendicularly to the common longitudinal axis of the conductors, which recess being opened to the end-surface of said second conductor and having a rectangular cross-section, and by a transparent control member (68, 70) removably disposed in said recess (64a), said member having a first surface part (68a, 70b) facing the end-surface of said first conductor (62) and extending parallel thereto, and said member having at least one other surface part (68b, 70a₁,₂) being inclined to the common longitudinal axis whereby light propagating through said first cylindrical light conductor (62) is transmitted to said second cylindrical light conductor (64) via said first surface part (68a, 70b) of said control member (68, 70) while the rest of the light being propagated is partly refeleeted laterally outwardly by said inclined surface part (68b, 70a₁,₂) and partly transmitted through said inclined surface part into said second cylindrical light conductor (64).

2. A photoradiator according to claim 1, wherein said transparent control member (70) has two of said inclined surface parts (70a₁; 70a₂) and said first surface part (70b) is disposed between said two inclined surface parts (70a₁; 70a₂) which surface parts converge in the direction to the flat end-surface of said first light conductor (62).

3. A photoradiator according to claim 2, wherein said transparent control member (70) has been rotated 180° around its longitudinal axis such that said two inclined surface parts (70a₁; 70a₂) diverge in the direction to the flat end surface of said first light conductor (62).

## Patentansprüche

1. Ein Leuchtstrahler zum Steuern von durch ihn hindurchgeleitetem Licht mit einem ersten und einem zweiten zylindrischen Lichtleiter (62, 64), welche genannten Leiter entlang einer gemeinsamen Längsachse angeordnet sind und jeder eine äußere zylindrische Wand aufweist, wobei der genannte erste zylindrische Lichtleiter (62) eine der Stirnfläche des genannten zweiten zylindrischen Lichtleiters zugewandte Stirnfläche aufweist, dadurch gekennzeichnet, daß beide genannten Stirnflächen des ersten Leiters (62) und des zweiten Leiters (64) eine sich senkrecht zur genannten Längsachse erstreckende ebene Stirnfläche aufweisen, wobei die Stirnfläche des genannten zweiten zylindrischen Lichtleiters mit einer langgestreckten Vertiefung (64a) versehen ist, die eine senkrecht zur gemeinsamen Längsachse der Leiter verlaufende Längsachse aufweist, welche Vertiefung zur Stirnfläche des genannten zweiten Leiters hin offen und von rechteckigem Querschnitt ist, und durch ein durchsichtiges Steuerelement (68, 70), das entfernbar in der genannten Vertiefung (64a) angeordnet ist, wobei das genannte Element einen ersten Flächenabschnitt (68a, 70a) aufweist, der der Stirnfläche des genannten ersten Leiters (62) zugewandt ist und sich parallel zu diesem erstreckt, und das genannte Element wenigstens einen anderen Flächenabschnitt (68b, 70a₁,₂) aufweist, der schräg zur gemeinsamen Längsachse verläuft, wodurch Licht, das sich durch den genannten ersten zylindrischen Lichtleiter (62) hindurch fortpflanzt, über den genannten ersten Flächenabschnitt (68a, 70b) fes genannten Steuerelementes (68, 70) auf den genannten zweiten zylindrischen Lichtleiter (64) übertragen wird, während der Rest des sich fortpflanzenden Lichtes teilweise durch den genannten schrägverlaufenden Flächenabschnitt (68b, 70a₁,₂) seitlich nach außen reflektiert und teilweise durch den genannten schrägverlaufenden Flächenabschnitt hindurch in den genannten zweiten zylindrischen Lichtleiter (64) hinein übertragen wird.

2. Ein Leuchtstrahter nach Anspruch 1, in welchem das genannte durchsichtige Steuerelement (70) zwei der genannten schrägverlaufenden Flächenabschnitte (70a₁, 70a₂) aufweist und der genannten erste Flächenabschnitt (70b) zwischen den genannten zwei schrägverlaufenden Flächenabschnitten (70a₁, 70a₂) angeordnet ist, welche Flächenabschnitte in Richtung der ebenen Stirnfläche des genannten ersten Lichtleiters (62) konvergieren.

3. Ein Leuchtstrahler nach Anspruch 2, in welchem das genannte durchsichtige Steuerelement (70) derart um 180° um seine Längsachse gedreht worden ist, daß die genannten zwei schrägverlaufenden Flächenabschnitte (70a₁;

70a₂) in Richtung der ebenen Stirnfläche des genannten ersten Lichtleiters (62) divergieren.

## Revendications

1. Un photoradiateur pour diffuser de la lumière transmise par lui, comprenant des premiers et seconds conducteurs de lumière cylindriques (62, 64), lesdits conducteurs étant disposés le long d'un axe longitudinal commun et comportant chacun une paroi cylindrique extérieure, ledit premier conducteur de lumière cylindrique (62) comportant une surface extrême qui est dirigée vers la surface extrême dudit second conducteur de lumière cylindrique, caractérisé en ce que lesdites surfaces extrêmes du premier conducteur (62) et du second conducteur (64) comportent toutes deux une surface extrême plane s'étendant perpendiculairement audit axe longitudinal, la surface extrême dudit second conducteur de lumière cylindrique étant pourvue d'un évidement allongé (64a) comportant un axe longitudinal orienté perpendiculairement à l'axe longitudinal commun des conducteurs, ledit évidement étant ouvert en direction de la surface extrême dudit second conducteur et ayant une section droite rectangulaire, tandis qu'il est prévu un élément de commande transparent (68, 70) disposé de façon amovible dans ledit évidement (64a), ledit élément comportant une première partie de surface (68a, 70b) dirigée vers la surface extrême dudit premier conducteur (62) et s'étendant parallèlement à celle-ci, et ledit élément comportant au moins une autre partie de surface (68b, 70a₁,₂) qui est inclinée par rapport à l'axe longitudinal commun de façon que de la lumière se propageant dans ledit premier conducteur de lumière cylindrique (62) soit transmise vers ledit second conducteur de lumière cylindrique (64) par l'intermédiaire de ladite première partie de surface (68a, 70b) dudit élément de commande (68, 70) tandis que le reste de la lumière propagée est partiellement réfléchie latéralement vers l'extérieur par ladite partie de surface inclinée (68b, 70a₁,₂) et partiellement transmise par l'intermédiaire de ladite partie de surface inclinée audit second conducteur de lumière cylindrique (64).

2. Un photoradiateur selon la revendication 1, dans lequel ledit élément de commande transparent (70) comporte deux desdites parties de sur-faces inclinées (70a₁; 70a₂) et ladite première partie de surface (70b) est disposée entre lesdites deux parties de surfaces inclinées (70a₁; 70a₂), ces parties de surfaces convergeant en direction de la surface extrême plane dudit premier conducteur de lumière (62).

3. Un photoradiateur selon la revendication 2, dans lequel ledit élément de commande transparent (70) a été tourné de 180° autour de son axe longitudinal de telle sorte que lesdites deux par-ties de surfaces inclinées (70a₁; 70a₂) divergent en direction de la surface extrême plane dudit premier conducteur de lumière (62).

FIGURE 1

FIGURE 2

FIGURE 3